# EUROPEAN PATENT APPLICATION

(11) **EP 3 279 439 A1**
(43) Date of publication of application: **07.02.2018**
(21) Application number: 17183648.9
(22) Date of filing: 27.07.2017
(51) Int. Cl.: F01N 3/20, B01F 3/04, B05B 1/34, B01D 53/00, F02M 61/18

(54) **SCR DOSER SPRAY ATOMIZATION**

(30) Priority: 02.08.2016 GB 201613307
(71) Applicant: Delphi International Operations Luxembourg S.à r.l., 4940 Bascharage (LU)
(72) Inventor: FERRARO, Valentina, Greenwich, London SE10 9PN (GB); PANTENY, Simon, R., Rochester, Kent ME1 2AX (GB)
(74) Representative: Delphi France SAS

(57) **Abstract**

A selective catalytic reduction (SCR) doser (10) having a first outlet opening comprising a first plurality of orifices (22) extending through a transverse wall from the inner face to an outer face.

## Description

### TECHNICAL FIELD

The present invention relates to a selective catalytic reduction doser and more particularly to an arrangement enabling further spray and atomization of the expelled fluid reagent.

### BACKGROUND OF THE INVENTION

A selective catalytic reduction (SCR) doser consists of a valve member that controls the flow of a chemical, or reagent such as urea aqueous fluid, that will reduce the nitrous oxides exiting the tailpipe. While the valve controls the flow of this chemical the efficiency is dependent upon the distribution of the chemical generated within the exhaust in order to improve mixing and chemical interaction.

It is becoming important that not only the amount of liquid injected by a SCR doser is controlled, but also the level of atomisation of the spray. A spray with a greater atomisation improves the efficiency of the SCR system, thus reducing the amount of urea to be carried.

The orifices through which fluid urea is injected above atmospheric pressure defines the spray and, depending on the positioning of the spray orifices, in relation to the valve controlling flow, the degree of atomization can be adjusted but, depending on the number of spray orifices current designs can suffer from insufficient atomization and inconsistent spray behavior from one spray hole to another.

### SUMMARY OF THE INVENTION

Accordingly, it is an object of the present invention to resolve the above mentioned problems in providing a selective catalytic reduction (SCR) doser adapted to spray a reagent in a tailpipe of an internal combustion engine, said doser having a body defining an inner volume within which is arranged a valve member adapted to move along a main axis in order to open or to close a valve seat arranged on an inner face of a transverse wall of the body, said valve seat controlling a first outlet opening.

Advantageously, said first outlet opening comprises a first plurality of restricted orifices extending through said transverse wall from the inner face to an outer face.

Hence, the orifices of said first plurality extend parallel to the main axis.

Hence, the orifices of said first plurality are non-parallel to the main axis.

Hence, the orifices of said first plurality open in the outer face of the transverse wall within a first circle.

Hence, all the orifices of said first plurality open in the outer face of the transverse wall on said first circle.

Hence, said first circle C is axially centred.

Hence, the SCR doser further comprises a diffuser plate having a first face and an opposed second face, the plate being arranged on the body so that a cavity is defined between the outer face of the transverse wall and the first face of the diffuser plate, said first plurality of restricted orifices opening in said cavity.

Hence, said diffuser plate is provided on its first face with a recess dug in the thickness of the plate, the first face of the plate being in surface contact with the outer face of the transverse wall, said recess defining the cavity.

Hence, said diffuser plate is provided with a second plurality of spray holes extending through the plate between said first face and said opposed second face.

Hence, all the spray holes randomly open in the second face of the plate in a non-circular pattern.

In another alternative, the spray holes open in the second face of the plate within a second circle, meaning outwardly bounded by said second circle.

In another alternative, the spray holes open in the second face of the plate on said second circle.

Hence, said second circle is axially centred.

In an alternative, said first circle is smaller than said second circle.

In another alternative, said first circle is larger than said second circle.

### BRIEF DESCRIPTION OF THE DRAWINGS

The present invention is now described by way of example with reference to the accompanying drawings in which:
Figure 1 is an axial section of a first embodiment of a SCR doser provided with a diffuser plate as per the invention.
Figures 2 and 3 are top views of two alternatives of the transverse wall and diffuser plate of figure 1.
Figure 4 is an axial section of a second embodiment of a SCR doser provided with another diffuser plate as per the invention.
Figure 5 is a top view of the transverse wall and diffuser plate of figure 4.

### DESCRIPTION OF THE PREFERRED EMBODIMENTS

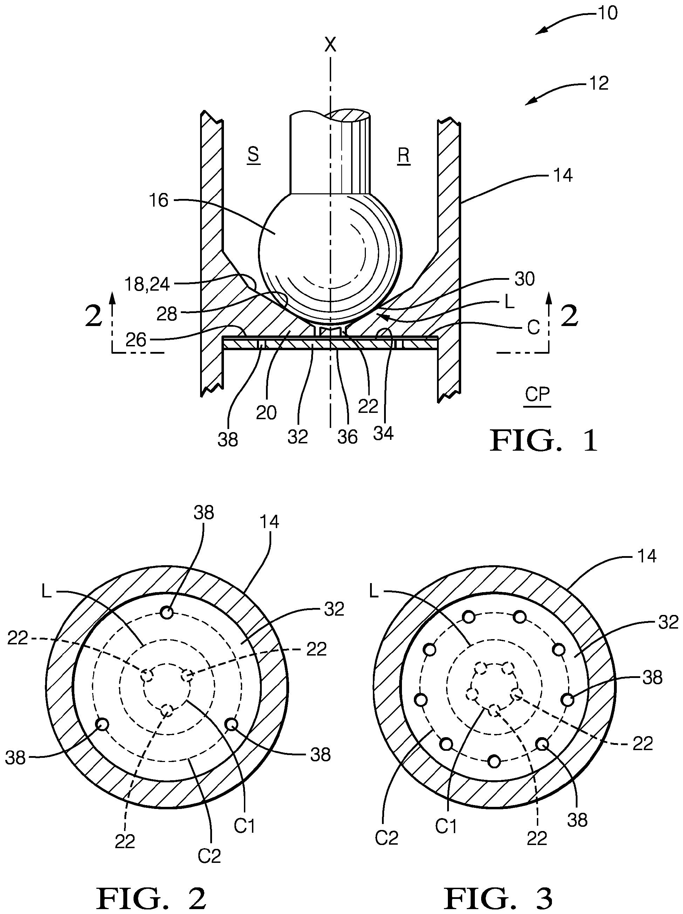

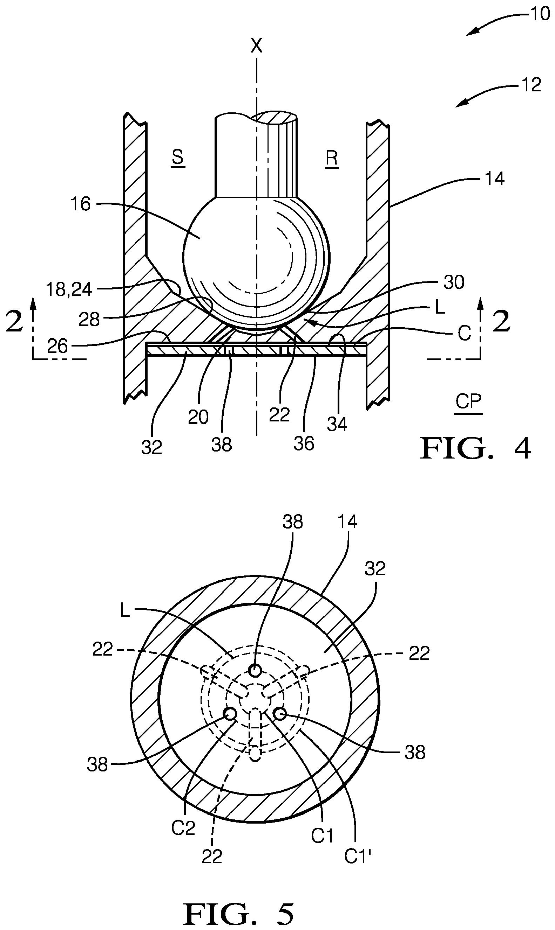

In reference to figures 1 and 4 are sketched partial sections of a first embodiment and a second embodiment of a selective catalytic reduction, hereafter SCR, doser 10 adapted to be arranged on a tailpipe, not represented. The doser 10 has a body 12 with a peripheral wall 14 surrounding an inner space S, in which is slidably arranged a valve member 16 adapted to move along a main axis X between a closed position CP and an open position OP of a valve seat 18.

The peripheral wall 14 comprises a transverse wall 20 having an inner face 24 oriented inside said inner space S and an opposed outer face 26 oriented toward the tailpipe. As visible on the figure, the valve seat 18 comprises a tapered face 28 provided on the inner face 24. A complementary movable seat face 30 of the valve member 16 which, in the exemplary embodiment presented is a spherical ball but another shape such as a male conical face, could also be utilized to cooperate with the tapered face 28.

Furthermore, the transverse wall 20 is provided with a plurality of orifices 22 extending through said transverse wall 20 and which openings on the inner face 24 are distributed on an axially centered first circle C1.

In closed position CP, the ball face 30 contacts the tapered face 28 along a closed circular sealing line L larger and concentric to the first circle C1 and, preventing reagent R pressurized in the inner space S to be sprayed via the first spray holes 22 and, in open position OP, the ball face 30 lifts away from the tapered face 28 opening a passage between the inner space S and the first spray holes 22 and enabling reagent spray.

The doser 10 further comprises a diffuser plate 32 fixed to the body 12, said diffuser plate 32 having a first face 34 arranged oriented toward the outer face 26 of the transverse wall and, an opposed second face 36 oriented toward the tailpipe. Between the outer face 26 of the transverse wall and the first face 34 of the diffuser plate is defined a thin cavity C in which open the first spray holes 22.

On the figures, the diffuser plate 32 is fixed at a small distance from the outer face 26, the cavity C being defined by said small distance, between the faces. In a non-represented alternative, the cavity C is defined by a recess dug in the first face 34 of the plate, the recess being surrounded by a border that is in surface abutment against the outer face 26 of the transverse wall.

Also, the diffuser plate 32 is provided with a set of spray holes 38 creating a fluid communication through said plate 32, between the first 34 and second 36 faces. In the exemplary embodiment of the figure, the spray holes 38 axially X extend through the plate and are distributed on a second circle C2 axially centered. In a non-represented alternative, said spray holes 38 extend in making an angle with the main axis.

The orifices 22 and the spray holes 38 have a small cross-section from few hundredth to few tenth of a millimeter.

In the first embodiment presented on figure 1, the first spray holes 22 are axially X pierced through the transverse wall so that their openings on the outer face 26 are also distributed on said first circle C1. Furthermore, the second circle C2 is of a larger diameter than the first circle C1 so that, in open position OP of the valve member 16, pressurized reagent exits the inner space S by passing through the first spray holes 22 and filling the cavity C, prior to flow outwardly toward the second spray holes 38 that finally spray the reagent in the tailpipe.

In a first alternative shown on figure 2, the doser 10 is provided with three firsts holes 22 and three second holes 38 while, in a second alternative presented on figure 3, the doser 10 has five firsts holes 22 and nine second holes 38. These alternatives are simple examples and any other quantity of holes is of course possible.

In the second embodiment presented on figure 4, the first spray holes 22 extend angularly relative to the main axis X so that their openings on the outer face 26 are distributed on an outer first circle C1' and, the second circle C2 is of a smaller diameter than said outer first circle C1' so that, in open position OP of the valve member 16, pressurized reagent exits the inner space S by passing through the first spray holes and filling the cavity C wherein the reagent flows inwardly, and goes through the second spray holes 38 which finally spray the reagent in the tailpipe.

In an alternative shown on figure 5, the doser 10 is provided with three firsts orifices 22 and three second holes 38 while any other quantity of holes is of course possible.

Alternatively the second holes 38 may be distributed on a second circle C2 that is greater than the first circle C1'. Also, in a non-represented alternative, the spray holes 38 may be randomly distributed and exit the diffuser plate 32 in a non-circular pattern.

### LIST OF REFERENCES

- X: main axis
- S: inner space
- CP: closed position
- OP: open position
- R: reagent
- L: sealing line
- C1: first circle
- C2: second circle
- C1': outer first circle
- C: cavity

- 10: SCR doser
- 12: body
- 14: peripheral wall
- 16: valve member
- 18: valve seat
- 20: transverse wall
- 22: orifices
- 24: inner face of the transverse wall
- 26: outer face of the transverse wall
- 28: tapered face
- 30: movable seat face
- 32: diffuser plate
- 34: first face of the diffuser plate
- 36: second face of the diffuser plate
- 38: spray holes

## Claims

1. Selective catalytic reduction (SCR) doser (10) adapted to spray a reagent (R) in a tailpipe of an internal combustion engine, said doser (10) having a body (12) defining an inner volume (S) within which is arranged a valve member (16) adapted to move along a main axis (X) in order to open or to close a valve seat (18) arranged on an inner face (24) of a transverse wall (20) of the body, said valve seat (18) controlling a first outlet opening (22),
**characterized in that**
said first outlet opening (22) comprises a first plurality of restricted orifices extending through said transverse wall from the inner face to an outer face.

2. SCR doser (10) as claimed in the preceding claim wherein the orifices (22) of said first plurality extend parallel to the main axis (X).

3. SCR doser (10) as claimed in claim 1 wherein the orifices (22) of said first plurality are non-parallel to the main axis (X).

4. SCR doser (10) as claimed in any one of the preceding claim wherein the orifices (22) of said first plurality open in the outer face (26) of the transverse wall within a first circle (C1).

5. SCR doser (10) as claimed in claim 4 wherein all the orifices (22) of said first plurality open in the outer face of the transverse wall (26) on said first circle (C1).

6. SCR doser (10) as claimed in any one of the claims 4 or 5 wherein said first circle (C1) is axially centred.

7. SCR doser (10) as claimed in any one of the preceding claim further comprising a diffuser plate (32) having a first face (34) and an opposed second face (36), the plate (32) being arranged on the body so that a cavity (C) is defined between the outer face (26) of the transverse wall and the first face (34) of the diffuser plate, said first plurality of restricted orifices (22) opening in said cavity (C).

8. SCR doser (10) as claimed in claim 7 wherein said diffuser plate (32) is provided on its first face (34) with a recess dug in the thickness of the plate, the first face of the plate being in surface contact with the outer face of the transverse wall, said recess defining the cavity.

9. SCR doser (10) as claimed in any one of the claims 7 or 8 wherein said diffuser plate (32) is provided with a second plurality of spray holes (38) extending through the plate between said first face (34) and said opposed second face (36).

10. SCR doser (10) as claimed in claim 9 wherein all the spray holes (38) randomly open in the second face (36) of the plate in a non-circular pattern.

11. SCR doser (10) as claimed in claim 9 wherein the spray holes (38) open in the second face (36) of the plate within a second circle (C2).

12. SCR doser (10) as claimed in claim 11 wherein all the spray holes (38) open in the second face of the plate on said second circle (C2).

13. SCR doser (10) as claimed in any one of the claims 11 or 12 wherein said second circle (C2) is axially centred.

14. SCR doser (10) as claimed in claim 13 when taken in combination with claim 6 wherein said first circle (C1) is smaller than said second circle (C2).

15. SCR doser (10) as claimed in claim 13 when taken in combination with claim 6 wherein said first circle (C1) is larger than said second circle (C2).
